# EUROPEAN PATENT APPLICATION

(11) **EP 0 567 708 A1**
(43) Date of publication of application: **03.11.1993**
(21) Application number: 92480065.9
(22) Date of filing: 30.04.1992
(51) Int. Cl.: G06F 12/08

(54) **Apparatus for optimizing cache memory invalidation**

(71) Applicant: International Business Machines Corporation, Armonk, N.Y. 10504 (US)
(72) Inventor: Bellagamba, Patrice, F-78220 Viroflay (FR); Dorel, Alain, F-06270 Villeneuve-Loubet (FR); Glaise, René, F-06000 Nice (FR)
(74) Representative: de Pena, Alain

(57) **Abstract**

An apparatus for optimizing cache memory invalidation in a data handling system comprising a processor (2) with its associated cache (16), and a main memory which may be accessed by a plurality of users, including said processor. The apparatus for optimizing the cache invalidation process (64) necessary when a user other than the processor updates said main memory, comprises a remote copy of the directory of said cache, placed between the processor and the main memory. The remote copy allows limiting the cache invalidation process to the case when the updated portion of main memory has indeed its copy in the cache. The remote copy is updated at the same time it allows cache invalidation, and when a read operation by the processor requires fetching data in main memory that is not resident in the cache.

Whereby the invalidation process is limited to strictly necessary cases, leaving the processor mostly unperturbed and ready for processing.

## Description

The present invention relates to cache memories in general, and more particularly to an apparatus for optimizing cache memory invalidation.

High speed and low cost have always been the main driving forces in the development of data handling systems. A third concern is to be raised when it comes to memory elements in such systems, as to high storage capacity. Large and fast memories have always been expensive, while inexpensive and large ones prove to be too slow for certain high performance data handling applications. The concept of 'cache memory' has therefore emerged.

Cache memories are high-speed memories of relatively small storage capacity and low cost, that are placed between processors, and slower but larger and therefore relatively inexpensive memories called 'main memories'. The goal is, by combining the characteristics of both cache and main memories, to come up with a data handling system featuring at the same time low cost, high speed and high storage capacity.

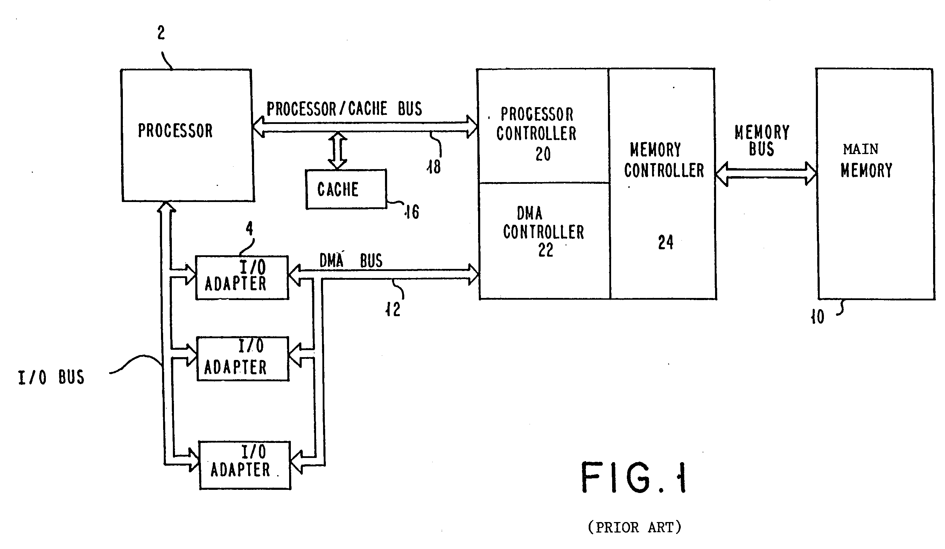

The goal is achieved in such a system by having the cache memory constantly keep available to the processor a copy of portions of the main memory that are most likely going to be needed within the next processing sequences, whether it be instructions or data. The implementation as known from the prior art is shown FIG.1: when fetching instructions or data, the PROCESSOR 2 determines if a cache hit occurred, meaning that the requested information (instructions or data) is present in the CACHE 16, in which case such an information is quickly made available to the processor, due to the fast access time of the cache memory. If the requested information is not present in the cache, this is called a cache miss, in which case the processor needs to further look for the information in the slower MAIN MEMORY 10. The hit rate is the percentage of accesses that are cache hits, and is affected by the size and organization of the cache memory, the cache algorithm used and the type of program under run. The higher the rate is, the faster operations will be performed by the processor, increasing the overall system performance at a relatively low cost. Hit rates of over 90% can be achieved in current systems, making the cache concept worthwhile.

The concept is well-known in the prior art and more details can for example be found in 'i486 Intel processor hardware reference manual', especially chapter 6, or in European Patent Application 87430014.8 published on November 2nd, 1988 under number 0 288 649, the teaching of which will be incorporated hereafter.

One of the problems associated with cache memories, is to be able to ensure consistency of their content with that of the main memory:
this is true as the processor writes data in the cache memory for speed sake of the system. In that case, several methods exist to ensure data consistency between the two memories, amongst which the sole 'store-thru' or 'write-thru' one will be considered. It consists basically in writing data in the main memory immediately after or while it is being written in the cache memory by the processor.

It is also true in the very common situation when one or several other processors (possibly having one or several associated cache memories), or other peripheral devices or communication lines thru I/O ADAPTERS 4 on FIG.1 featuring Direct Memory Access or DMA capability, share the main memory with the first processor, and update information in it. Such DMA devices and their associated DMA BUS 12 can be seen on FIG.1, whereas arbitration over main memory is ensured by PROCESSOR CONTROLLER 20, DMA CONTROLLER 22 and MEMORY CONTROLLER 24. It will be obvious to the man skilled in the art that an update of the main memory will sooner or later have to be propagated in the cache memory. This is very commonly achieved by using a so-called 'bus watching' or 'snooping' technique: whenever the shared main memory is updated by one of the processors or I/O adapters, an invalidation process to the cache memory is initiated in case copies of the updated portions from main memory reside in the cache memory, so that these copies cannot be utilized anymore by the first processor, as containing stale information.

It will be obvious to the man skilled in the art that the latter invalidation process in the cache memory interferes with the first processor's activity at a very high rate, by often requesting and gaining access to the PROCESSOR/CACHE BUS 18. The overall system performance is thereby considerably slowed down whilst very seldomly is the invalidation process really useful, because statistically (capacity of the cache memory is indeed much smaller than that of the main memory), chances are very low that an updated portion in the main memory will have its copy in the cache memory.

It is therefore an object of the present invention to provide an apparatus for optimizing cache memory invalidation.

It is a further object of the invention to optimize the cache memory invalidation by limiting the number of invalidation attempts to the cache memory, and more particularly, by allowing attempts only when the updated portions in the main memory indeed have a copy in the cache memory.

The invention includes, in a data handling system comprising a processor with its associated cache, a main memory which may be accessed by a plurality of users, including said processor, an apparatus for optimizing the cache invalidation process necessary when a user other than the processor updates said main memory. The apparatus comprises a remote copy of the directory of said cache, placed between the processor and the main memory. The remote copy allows limiting the cache invalidation process to the case when the updated portion of main memory has indeed its copy in the cache. The remote copy is updated at the same time it allows cache invalidation, and when a read operation by the processor requires fetching data in main memory that is not resident in the cache.

Whereby the invalidation process is limited to strictly necessary cases, leaving the processor mostly unperturbed and ready for processing.

The invention more specifically includes an apparatus for optimizing cache invalidation, in a data handling system comprising a processor with an associated cache comprising a directory and a data array, at least one i/o adapter, a main memory, a memory controller coupled to the main memory, a processor controller coupled to the memory controller to manage access of the processor to the main memory, a DMA controller also coupled to the memory controller to manage access of any i/o adapter to the main memory, a data bus shared between the processor, the processor controller and the cache, and a first address bus shared between the processor and the cache, being intercepted in the cache and forwarded onto a second bus shared between the cache and the processor controller, said apparatus comprising means in the processor controller to initiate the cache invalidation only when the i/o adapter updates portions in the main memory having a copy in the cache.

The above introduction had to be read in conjunction with the following schematic:
FIG.1 being a view of a conventional cache memory technique in a data handling system.

The invention will be better understood from the following detailed description read in conjunction with the following schematics:
FIG.2 being a general view of a preferred embodiment of the invention.
FIG.3 being a more detailed view of Cache memory 16.
FIG.4 being a more detailed view of the cache invalidation apparatus 64 of the invention.

The data handling system in which the invention is embodied, will be assumed, for explanation purpose, to be equipped with: a MAIN MEMORY 10 of any type (static or dynamic) having a capacity of 16Mbytes (0-23 bit address), organized in 512 pages (high-order 0-8 bits from the address) each comprising 2048 (9-19 bits from the address) contiguous lines of 4 (bits 20 and 21 from the address) contiguous words, each word being 4 (bits 22 and 23 from the address) bytes long, and a 2-way associative CACHE 16 featuring a Least Recently Used replacement algorithm, comprising a data array of two A and B 8kwords arrays, and an associated directory of two A and B 2k x 10bits arrays (9 bits for storing a page address value, and 1 associated VALIDATION BIT indicating whether this latter value is valid or not), and one 2k x 1bits array (containing an associated REPLACEMENT POINTER, to point on the least recently used side A or B).

It will be obvious to the man skilled in the art, that other capacities, memory organizations and addressing schemes could be implemented all the same along with the object of the present invention.

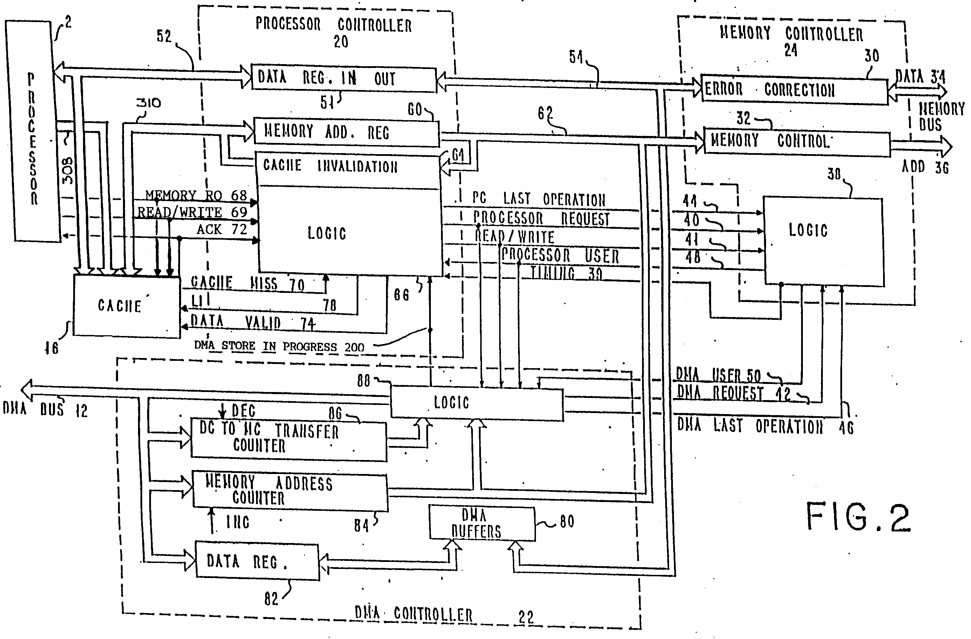

FIG.2 is a general view of a preferred embodiment of the invention.

The transmit and receive processes which may be implemented for transmitting or receiving data bit streams to or from a selected communication line connected to a selected i/o adapter will be briefly discussed (see also FIG.1):
A transmit operation causing the transfer of a data burst from the PROCESSOR 2 to a selected I/O ADAPTER 4 is initiated in the following way: PROCESSOR 2 sends a TRANSMIT command to the selected adapter thru the I/O BUS (Cf: FIG.1). The TRANSMIT command, starting address and burst length are sent by the selected adapter to DMA CONTROLLER 22 thru the DMA BUS 12. Then, DMA CONTROLLER 22 causes the data burst to be transferred from MAIN MEMORY 10 to DMA BUFFERS 80 in DMA CONTROLLER 22, and then to the selected adapter. A receive operation causing the transfer of a data burst received by an adapter to the main memory is initiated in the following way: PROCESSOR 2 sends a RECEIVE command to the selected I/O ADAPTER 4, then the starting address in the memory from which the data burst is to be stored, and the burst length. This information is sent to DMA CONTROLLER 22 and the data burst is temporarily stored into the DMA BUFFERS 80. When the complete burst is received, it is transferred to MAIN MEMORY 10.

MEMORY CONTROLLER 24 controls accesses to the memory with the help of an ERROR CORRECTION mechanism 30 and a MEMORY CONTROL circuit 32. Data which are to be written into or read from the MAIN MEMORY 10 are provided on DATA lines 34 of MEMORY BUS (Cf: FIG.1). The memory address is provided on ADD lines 36.

LOGIC circuit 38 receives and arbitrates the memory access requests from PROCESSOR CONTROLLER 20 and DMA CONTROLLER 22, and generates timing information on TIMING lead 39 to control the sequence of operations.

For that purpose, LOGIC circuit 38 receives processor request signals on lead PROCESSOR REQUEST 40, as well as the READ/WRITE control signal 41 from PROCESSOR CONTROLLER 20, the DMA REQUEST 42 from DMA CONTROLLER 22, a processor PC LAST OPERATION signal on lead 44 and the DMA LAST OPERATION signal on lead 46.

LOGIC circuit 38 generates an active signal on PROCESSOR USER lead 48 or on DMA USER lead 50 to grant access to the MAIN MEMORY 10 to one user. In conflicting situations, DMA CONTROLLER 22 and PROCESSOR CONTROLLER 20 requests are serviced alternatively. If the data handling system includes a plurality of processor and DMA users, a priority between the different users is established, so that only one request may be serviced.

A selected user is serviced until it relinquishes the memory by activating its LAST OPERATION line.

PROCESSOR CONTROLLER 20 comprises DATA REG IN OUT registers 51 storing data to be written into or read from MAIN MEMORY 10. As shown FIG.2, registers 51 are connected to PROCESSOR 2 by bus 52 of the PROCESSOR/CACHE BUS 18, and is connected to the ERROR CORRECTION mechanism 30 thru bus 54.

Memory addresses are provided by PROCESSOR 2 thru bus 308, latched in CACHE 16 then on thru bus 310 onto MEMORY ADD REG 60.

PROCESSOR CONTROLLER 20 comprises a LOGIC arrangement 66, which receives a MEMORY RQ signal on lead 68 from PROCESSOR 2. Data and addresses relative to a memory access request may be stacked if the MEMORY CONTROLLER 24 is busy. When the processor requests access to the memory, it activates lead 68, as well as a READ/WRITE control signal on lead 69 and addresses to be accessed on busses 308/310 (thru CACHE 16). In the preferred embodiment of the invention, a memory request from the processor causes one word, i.e four bytes to be transferred.

LOGIC circuit 66 receives a CACHE MISS signal on lead 70 in case the processor request does not hit the cache, meaning that the addressed position is not in CACHE 16.

DMA CONTROLLER 22 comprises DMA BUFFERS 80, in which a burst of data received from or to be sent to DMA BUS 12 thru DATA REG 82 can be temporarily stored. During a read or write data transfer between an I/O ADAPTER 4 and the DMA BUFFERS 80, MEMORY CONTROLLER 24 is not involved and it can service the processor requests.

DMA CONTROLLER 22 also comprises a MEMORY ADDRESS COUNTER 84 and a DC TO MC TRANSFER COUNTER 86. Counter 84 is connected to DMA BUS 12 and contains a memory address. The MEMORY ADDRESS COUNTER content is provided to MEMORY CONTROL circuit 32 thru bus 62. The data to be written into or read from the memory are sent from DMA BUFFERS 80 or written into DMA BUFFERS 80 thru bus 54.

As can be seen on FIG.2, PROCESSOR CONTROLLER 20 and DMA CONTROLLER 22 share the same address bus 62 to MEMORY CONTROLLER 24. Thus, during a DMA write operation, PROCESSOR CONTROLLER 20 can steal the address going from DMA CONTROLLER 22 to MEMORY CONTROLLER 24 when signalled by the DMA STORE IN PROGRESS on lead 200, without any extra control, time lost or special protocol. This address sampling is completely transparent to the MEMORY CONTROLLER 24.

LOGIC circuit 88 receives the processor requests on lead 40, the DMA user signals on lead 50 and the DMA write signal from DMA BUS 12 ; it generates the DMA REQUEST 42, the DMA LAST OPERATION 46 and the DMA STORE IN PROGRESS 200.

The PROCESSOR REQUEST lead 40 is provided not only to MEMORY CONTROLLER 24 but also to DMA CONTROLLER 22. The DMA REQUEST from DMA CONTROLLER on lead 42 is provided to MEMORY CONTROLLER 24, causing the processor request or DMA request to be selected, and a grant signal on PROCESSOR USER or DMA USER leads 48 or 50 to be activated.

More details about FIG.2 can be found in the above-referenced European Patent Application 87430014.8.

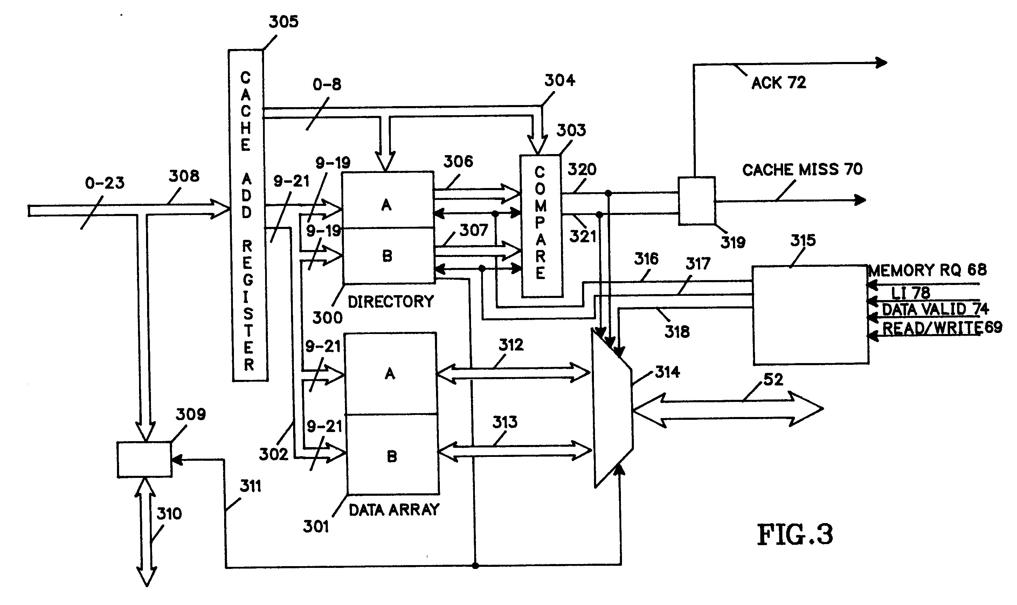

In such a data handling system, CACHE 16 is involved during three operations as summarized below:
1- a write request to the main memory by PROCESSOR 2 occurs at the same time or immediately after it occurs in CACHE 16,
2- a read request by PROCESSOR 2 is first tempted in CACHE 16: if requested data is not present, then it is being fetched in MAIN MEMORY 10 and also loaded in CACHE 16, and
3- a write request to the main memory by an I/O ADAPTER 4, once serviced when MEMORY CONTROLLER 24 is available, needs to be propagated somehow to CACHE 16. At this point, it is to be noticed that a write or read by PROCESSOR 2 occurs at the word level (4 bytes written or read at the same time).
   Now, with respect to FIG. 3, a more detailed view of said CACHE 16 is provided.

In the course of operation 1. :
PROCESSOR 2 sets READ/WRITE signal 69 to WRITE, activates MEMORY RQ 68 lead, places a current memory address on bus 308, and data to be written at that address on bus 52. The memory address is temporarily stored in CACHE ADD REGISTER 305.

A DIRECTORY 300 search is then performed to find out whether the page address is already present in CACHE 16 at the current line address. Bits 9-19 allow addressing DIRECTORY 300 thru bus 302. The stored page address can then be output on bus 306 (for directory A-side) and 307 (directory B-side). COMPARE block 303 allows comparing those two stored page addresses, with the current page address present on bus 304. The comparison also takes into account the VALIDATION BIT value on each A and B side (leads 316 and 317).

If a hit occurs, lead 320 or 321 is activated depending on which side A or B, stored and current page addresses match. Signal on those latter leads, together with signal on lead 318 (deduced from READ/WRITE 69) set logic 314 so that data to be written are transferred from bus 52 to bus 312 (A side) or 313 (B side). DATA ARRAY 301 of CACHE 16 is thus updated with data to be written in MAIN MEMORY 10, and REPLACEMENT POINTER is also updated so as to point on the side A or B not being currently updated (least recently used side).

If no hit occurs, logic 319 activates a CACHE MISS signal on lead 70. Nothing else needs be performed as far as CACHE 16.

In both cases (hit and no-hit), data to be written update MAIN MEMORY 10 ('store thru') thru PROCESSOR CONTROLLER 20 and MEMORY CONTROLLER 24.

In the course of operation 2. :
PROCESSOR 2 sets READ/WRITE signal 69 to READ, activates MEMORY RQ 68 lead, and places a current memory address on bus 308 where data are to be read. The memory address is temporarily stored in CACHE ADD REGISTER 305.

A DIRECTORY 300 search is then performed to find out whether the page address is already present in CACHE 16 at the current line address. Bits 9-19 allow addressing DIRECTORY 300 thru bus 302. The stored page address can then be output on bus 306 (for directory A-side) and 307 (directory B-side). COMPARE block 303 allows comparing those two stored page addresses, with the current page address present on bus 304. The comparison also takes into account the VALIDATION BIT value on each A and B side (leads 316 and 317).

If a hit occurs, lead 320 or 321 is activated depending on which side A or B, stored and current page addresses match. Signal on those latter leads, together with signal on lead 318 (deduced from READ/WRITE 69) set logic 314 so that data to be read are transferred from bus 312 (A side) or 313 (B side) to bus 52. The associated REPLACEMENT POINTER is also updated so as to point on the side A or B not being currently read (least recently used side). Besides, logic 319 activates an ACK signal 72 to PROCESSOR 2, so as to indicate that the valid requested data are present on bus 52.

If no hit occurs, logic 319 activates a CACHE MISS signal on lead 70 to PROCESSOR CONTROLLER 20. A line fetch from MAIN MEMORY 10 must then be performed: the fetching is done under the control of PROCESSOR CONTROLLER 20 and MEMORY CONTROLLER 24. Fetched data appear on bus 52, and are latched by CACHE 16 when DATA VALID signal 74 is activated by PROCESSOR CONTROLLER 20. This activation results in lead 318 forcing data to be transferred from bus 52 to bus 312 (A-side) or bus 313 (B-side), depending upon the value of REPLACEMENT POINTER, so as to update the least recently used side.

It is to be noticed that the DIRECTORY 300 is able to use bit 22 or 23 of the memory address (which are otherwise not used, a write or read by PROCESSOR 2 occurring at the word level, as previously mentioned), to transport the REPLACEMENT POINTER value to PROCESSOR CONTROLLER 20. This is what is achieved with lead 311, and logic 309, to carry the REPLACEMENT POINTER onto bus 310. A dedicated supplementary lead at the interface between CACHE 16 and PROCESSOR CONTROLLER 20 could otherwise be implemented instead of 311/309.

Once fetched, data are also ready for PROCESSOR 2 on bus 52. In the course of operation 3. :
MEMORY CONTROLLER 24 grants access to MAIN MEMORY 10 to DMA CONTROLLER 22. Addresses where the DMA write occurs are present on bus 62.

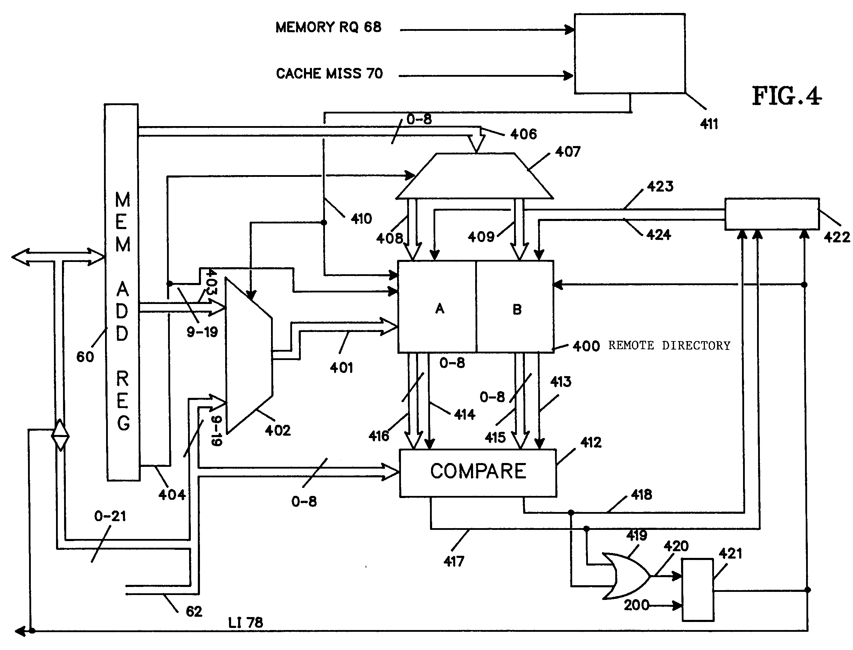

The CACHE INVALIDATION apparatus 64 (Cf: FIG.2) at chosen times that are detailed below with respect to FIG.4, activates the LI lead 78, and sets the DMA address on bus 310. The DMA address is temporarily stored in CACHE ADD REGISTER 305.

A DIRECTORY 300 search is then performed to find out whether the page address is already present in CACHE 16 at the current line address. Bits 9-19 allow addressing DIRECTORY 300 thru bus 302. The stored page address can then be output on bus 306 (for directory A-side) and 307 (directory B-side). COMPARE block 303 allows comparing those two stored page addresses, with the current page address present on bus 304. The comparison also takes into account the VALIDATION BIT value on each A and B side (leads 316 and 317).

If a hit occurs, lead 320 or 321 is activated depending on which side A or B, stored and current page addresses match. Signal on those latter leads, allow logic 315 to disable the VALIDATION BIT on the same side, so that this CACHE 16 directory position is flagged as corresponding to a position in DATA ARRAY 301 containing stale information.

It will be obvious to the man skilled in the art that each time the LI lead 78 is activated, and the whole above-described process is performed, bus 310 is busy with transferring DMA addresses to the cache, therefore considerably perturbing and slowing down PROCESSOR 2 operation. Yet very seldomly is the invalidation process really useful, since statistically (the capacity of CACHE 16 being indeed much smaller than that of MAIN MEMORY 10), chances are very low that an updated portion in MAIN MEMORY 10 thru a DMA process, will have its copy in CACHE 16.

With respect to FIG.4 is proposed a more detailed view of the optimized CACHE INVALIDATION apparatus 64 of the invention. It comprises mainly a REMOTE DIRECTORY 400 which is intended to always be an up-to-date copy in PROCESSOR CONTROLLER 20 of the DIRECTORY 300 in CACHE 16. This feature now gives PROCESSOR CONTROLLER 20 the capability of deciding, by checking the content of REMOTE DIRECTORY 400, for which of the DMA addresses, a cache invalidation shall be performed: it shall be performed only when necessary (the updated MAIN MEMORY 10 portion has its copy in CACHE 16), thereby drastically reducing the bus 310 occupation and PROCESSOR 2 burden.

In the course of operation 3. :
As already mentioned, MEMORY CONTROLLER 24 grants access to MAIN MEMORY 10 to DMA CONTROLLER 22. Addresses where the DMA write occurs are present on bus 62. DMA STORE IN PROGRESS lead 200 (see also FIG.2) is activated during the DMA process by DMA CONTROLLER 22.

The address is transferred to bus 401, thru logic 402. Lead 410, generated by logic 411 (MEMORY RQ 68 and CACHE MISS 70 signals not being activated), controls logic 402.

A REMOTE DIRECTORY 400 search is then performed. Bits 9-19 address REMOTE DIRECTORY 400 on bus 401. The stored page address can then be output on bus 416 (for remote directory A-side) and 415 (remote directory B-side). COMPARE block 412 allows comparing those two stored page addresses, with the current page address present on bus 62. The comparison also takes into account the VALIDATION BIT value on each A and B side (leads 414 and 413).

If a hit occurs, lead 417 or 418 is activated depending on which side A or B, stored and current page addresses match. Signal on those latter leads, allow logic 422 to disable the VALIDATION BIT on the same side (leads 423 or 424), so that this REMOTE DIRECTORY 400 position is flagged as corresponding to a position containing stale information. Leads 417 and 418 are ORed thru gate 419 on lead 420. Logic 421 then (leads 420 and 200 being activated) generates the invalidation signal to CACHE 16 on LI 78.

If no hit occurs, no line invalidation is initiated to CACHE 16.

In the course of operation 2. :
As previously mentioned with respect to FIG.3, PROCESSOR 2 sets READ/WRITE signal 69 to READ, activates MEMORY RQ 68 lead, and places a current memory address on bus 308 where data are to be read. The memory address is temporarily stored in CACHE ADD REGISTER 305.

A DIRECTORY 300 search is then performed as stated above in the course of operation 2: if a hit occurs, data to be read are transferred to bus 52.

If no hit occurs, the CACHE MISS signal is activated on lead 70 to PROCESSOR CONTROLLER 20. The MAIN MEMORY 10 fetching address is temporarily stored from bus 308 to bus 310 (thru CACHE 16) and MEM ADD REG 60 (Cf: FIG.2).

Now back to FIG.4, logic 411 is able to direct the line address from bus 403 to bus 401 thru logic 402. Meanwhile, the page address present on bus 406 is directed thru logic 407 onto bus 408 (A-side) or 409 (B-side) depending upon the value on lead 404, which is the REPLACEMENT POINTER (bit 22 or 23 of memory address) set by CACHE 16 as explained above. REMOTE DIRECTORY 400 is thus being updated according to what is being done in parallel in CACHE 16. Updating includes the associated VALIDATION BIT.

In the course of operation 1. :
Whether or not, the search in DIRECTORY 300 as described above, result in hit or no-hit is of no importance to REMOTE DIRECTORY 400: there is no need to update whatsoever.

Although the invention has been described in a particular embodiment, it will be obvious to the man skilled in the art, that the invention is applicable to all kinds of data handling systems involving a processor, its cache, and a main memory shared with other processors or communication lines.

## Claims

1. An apparatus for optimizing cache invalidation, in a data handling system comprising:
- a processor (2) with an associated cache (16) comprising a directory (300) and a data array (301),
- at least one i/o adapter (4),
- a main memory (10),
- a memory controller (24) coupled to the main memory,
- a processor controller (20) coupled to the memory controller to manage access of the processor to the main memory,
- a DMA controller (22) also coupled to the memory controller to manage access of any i/o adapter to the main memory,
- a data bus (52) shared between the processor, the processor controller and the cache, and
- a first address bus (308) shared between the processor and the cache, being intercepted in the cache and forwarded onto a second bus (310) shared between the cache and the processor controller,
said apparatus being characterized in that it comprises means in the processor controller to initiate the cache invalidation only when the i/o adapter updates portions in the main memory having a copy in the cache.

2. The apparatus according to claim 1 characterized in that said means in the processor controller comprise a remote directory (400) which content is a copy of that of the cache directory.

3. The apparatus according to claim 2 characterized in that the cache replacement policy is made known to the remote directory thru one bit of the second address bus.

4. The apparatus according to claim 2 characterized in that the cache replacement policy is made known to the remote directory thru a dedicated extra lead at the cache/processor controller interface.
